# EUROPEAN PATENT APPLICATION

(11) **EP 4 407 530 A1**
(43) Date of publication of application: **31.07.2024**
(21) Application number: 22949073.5
(22) Date of filing: 11.11.2022
(51) Int. Cl.: G06Q 10/06

(54) **POST LINKAGE APPARATUS AND METHOD APPLIED TO CTC CONSTRUCTION PLAN**

(30) Priority: 01.07.2022 CN 202210775215
(71) Applicant: Casco Signal Ltd., Shanghai 200072 (CN)
(72) Inventor: CHEN, Zhenjie, Shanghai 200072 (CN); ZHAO, Yangjie, Shanghai 200072 (CN); WU, Xiang, Shanghai 200072 (CN); CAO, Yahui, Shanghai 200072 (CN); CHEN, Wei, Shanghai 200072 (CN); CHEN, Dejun, Shanghai 200072 (CN); LI, Hongpeng, Shanghai 200072 (CN); KE, Jian, Shanghai 200072 (CN)
(74) Representative: Yang, Shu
(86) International application number: PCT/CN2022/131335
(87) International publication number: WO 2024/000991

(57) **Abstract**

The present invention discloses a post linkage apparatus and method applied to a CTC construction plan, the apparatus including: a TDMS server, a CTC, and a TD combined interface server, wherein the TDMS server is used for transmitting information pertaining to a construction symbol to an external device; the CTC is used for transmitting an application message for obtaining a construction blocking station yard device; and the TD combined interface server is used for receiving the application message and reading information pertaining to a construction blocking station yard device according to the application message, and transmitting the information pertaining to the application symbol and the information pertaining to the construction blocking station yard device to the CTC, such that the CTC automatically determines an associated object according to the information pertaining to the construction symbol, and executes a corresponding action by means of a corresponding execution device after a state control instruction of the associated object is received. The present invention uses an extended TD combined interface server, such that the CTC can operate a relevant device according to a construction plan, so as to implement linkage between the construction plan and a blocking and unblocking device, thereby improving the cooperation between various types of dispatching work and reducing the labor strength of railway dispatching staff.

## Description

### TECHNICAL FIELD

The present invention relates to the technical field of railway construction, in particular to a post linkage apparatus and method applied to a CTC construction plan.

### BACKGROUND

With more and more railway lines being constructed, the operation of trains becomes more and more intensive. There are more and more requirements for power outage/supply and blocking and construction of railway lines. However, the data transmission between the existing CTC (Centralized Traffic Control) system and TDMS (Technical Document Management System) system does not support the post linkage of a construction plan. The construction plan cannot be linked with a blocking/unblocking device of the CTC system.

In order to implement the combination of a construction plan, a power outage/supply function of a construction blocking station yard device and a real-time power outage/supply function of an overhead contact system, so as to improve the cooperative linkage between dispatched work types, reduce the workload of a train dispatching console, improve the working efficiency, and avoid incorrect operations, on the basis of the existing TD combined (interface information interaction between the CTC and the TDMS) protocol, the construction plan needs to be partially extended.

### SUMMARY

The present invention aims to solve at least one of the problems existing in the related art to at least some extent. For this purpose, a first object of the present invention is to provide a post linkage apparatus applied to a CTC construction plan. By means of an extended TD combined interface server, such that the CTC can operate a relevant device according to a construction plan, so as to implement linkage between the construction plan and a blocking and unblocking device, thereby improving the cooperation between various types of dispatching work and reducing the labor strength of railway dispatching staff.

A second object of the present invention is to provide a post linkage method applied to a CTC construction plan.

A third object of the present invention is to provide a computer-readable storage medium.

A fourth object of the present invention is to provide an electronic device.

In order to achieve the described objects, the present invention is implemented by the following technical solutions:
a post linkage apparatus applied to a CTC construction plan, including:
a TDMS server, for transmitting information pertaining to a construction symbol to an external device;
a CTC, for transmitting an application message for obtaining a construction blocking station yard device;
a TD combined interface server, respectively connected to the TDMS server and the CTC, in which the TD combined interface server is used for receiving and reading information pertaining to the construction blocking station yard device according to the application message, and transmitting the information pertaining to the construction symbol and the information pertaining to the construction blocking station yard device to the CTC, such that the CTC automatically determines an associated object according to the information pertaining to the construction symbol, and executes a corresponding action by means of a corresponding execution device after a state control instruction of the associated object is received.

Optionally, the TDMS server is further used for transmitting a dispatching command by means of the TD combined interface server, and the CTC is further used for transmitting corresponding dispatching prompt information according to the dispatching command, such that the external device executes a corresponding action by means of a corresponding execution device after the dispatching prompt information is received and confirmed.

Optionally, a command format of the dispatching command is different from a command format transmitted by the CTC and the TDMS server on the basis of an existing protocol.

Optionally, the dispatching command includes overhead contact system power outage/supply information and/or blocking/unblocking information of the construction blocking station yard device.

Optionally, the TDMS server is further used for transmitting a non-power outage/supply dispatching command by means of the TD combined interface server.

Optionally, the apparatus further includes: a TD combined sharing intermediate storage unit, for storing the information pertaining to the construction blocking station yard device.

Optionally, the TDMS server is further connected to the TD combined sharing intermediate storage unit, and the TDMS server is further used for creating a data table in the TD combined sharing intermediate storage unit, the data table including the information pertaining to the construction blocking station yard device, the information pertaining to the construction blocking station yard device including at least one of a blocking title, a date, a traveling platform number, a construction plan ID, a construction starting time, a station number, a device type, a device ID and a device name, and the device type including at least one of a power arm, a track, and a turnout.

Optionally, the TD combined interface server is further connected to the TD combined sharing intermediate storage unit, and when the TD combined interface server reads and transmits the information pertaining to the construction blocking station yard device to the CTC, the TD combined interface server is specifically used for reading all the information in the data table, assembling all the information according to an XML format, and transmitting the assembled information in the XML format to the CTC.

Optionally, the associated object is the construction blocking station yard device or power outage/supply data in a power influence range.

Optionally, the CTC includes:
an operating diagram display unit, for displaying a construction symbol and the construction blocking station yard device and the power outage/supply data in the power influence range which are associated with the construction symbol.

Optionally, the apparatus includes:
a power outage/supply execution device, connected to the operating diagram display unit, and used for executing a power outage/supply action in the power influence range after the operating diagram display unit receives a power outage/supply state instruction; and
an inter-blocking device, connected to the operating diagram display unit, and used for executing an unblocking or blocking action after the operating diagram display unit receives an inter-blocking state control instruction of the construction blocking station yard device.

Optionally, a switching control is provided on the operating diagram display unit, and when the construction blocking station yard devices are distributed at a plurality of station yards, the switching control is used for receiving a switching instruction, and executing a station yard switching action, and in which when the construction blocking station yard devices at the station yards are in different inter-blocking states, the names of the station yards are distinguished in different colors.

Optionally, the TDMS server is further used for transmitting a railway operating device list to the external device, such that a railway operator performs an inter-blocking control and a power outage/supply control on the construction blocking station yard and a power arm in the railway operating device list correspondingly.

Optionally, the application message includes at least one of a dispatching console entity number, a dispatching console code and a construction symbol date.

Optionally, when the data volume transmitted by the TD combined interface server is greater than a preset value or the transmitting duration is longer than a preset duration, the TD combined interface server is further used for transmitting a program running stop instruction to perform self-restart.

In order to achieve the described object, a second aspect of the present invention provides a post linkage method applied to a CTC construction plan, including:
receiving an application message for obtaining a construction blocking station yard device; and
transmitting information pertaining to a construction symbol to a CTC according to the application message, such that the CTC automatically determines an associated object according to the information pertaining to the construction symbol, and executes a corresponding action by means of a corresponding execution device after a state control instruction of the associated object is received.

Optionally, the method includes:
transmitting a dispatching command;
transmitting corresponding dispatching prompt information according to the dispatching command, such that an external device executes a setting action of an existing power arm in the CTC after the dispatching prompt information is received and confirmed, in which the dispatching command includes overhead contact system power outage/supply information and/or blocking/unblocking information of the construction blocking station yard device.

Optionally, if the associated object is power outage/supply data in a power influence range and a power outage/supply state instruction is received, then a power outage/supply action in the power influence range is executed by means of a power outage/supply execution device; and if the associated object is the construction blocking station yard device and an inter-blocking state control instruction of the construction blocking station yard device is received, then an unblocking or blocking action is executed by means of an inter-blocking device.

In order to achieve the described object, a third aspect of the present invention provides a computer-readable storage medium, storing a computer program which, when being executed by a processor, implements the post linkage method applied to a CTC construction plan.

In order to achieve the described object, a fourth aspect of the present invention provides an electronic device, including a processor and a memory, in which the memory stores a computer program which, when being executed by the processor, implements the post linkage method applied to a CTC construction plan.

The present invention at least has the following technical effects:
in the present invention, the TD combined interface server receives an application message for obtaining a construction blocking station yard device transmitted by the CTC, and according to the application message, transmits, to the CTC, the read information pertaining to the construction blocking station yard device and information pertaining to the construction symbol, so that the CTC can automatically determine an associated object according to the information pertaining to the construction symbol, and after receiving a state control instruction of the associated object, execute a blocking/unblocking action or power outage/supply action by means of a corresponding execution device, such that the present invention achieves partial extension of a construction plan on the basis of an existing TD combined protocol, and achieves the effect of transmitting the range of the railway operating devices affected by construction, such as turnouts, tracks, a signal machine, an overhead contact system, etc., to the CTC from the TDMS, so that the CTC operates the relevant devices according to the construction plan, such as information pertaining to a construction symbol, thereby implementing batch settings, such as line blocking, power outage/supply of an overhead contact system, and reducing the labour intensity of railway dispatchers. In addition, in the present invention, at the beginning of construction, on the CTC, the train dispatchers can block the relevant station yard devices in batch according to a railway operating device list in the construction plan obtained from the TDMS, set a power outage state for a power arm, so that safety protection for line blocking can be achieved, and when construction is finished, the train dispatchers can unblock the relevant station yard devices in batches according to the railway operating device list, and set a power supply state for the power arm, so that normal operation of the lines can be ensured.

### BRIEF DESCRIPTION OF THE DRAWINGS

Fig. 1 is a structural block diagram of a post linkage apparatus applied to a CTC construction plan according to an embodiment of the present invention.
Fig. 2 is a schematic diagram of a communication link of a post linkage apparatus applied to a CTC construction plan according to an embodiment of the present invention.
Fig. 3 is a working principle diagram of real-time power outage/supply of an overhead contact system according to an embodiment of the present invention.
Fig. 4 is a flowchart of a post linkage method applied to a CTC construction plan according to an embodiment of the present invention.

### EMBODIMENTS

Further description of the present invention in detail will be made below in combination with drawings and specific embodiments. The advantages and features of the present invention are clearer according to description and claims below. It is to be noted that the drawings in a quite simplified form with an inaccurate ratio are merely used for describing objectives of the embodiments of the present invention in an assistant manner conveniently and clearly.

The post linkage apparatus and method applied to a CTC construction plan of the present embodiments will be described below with reference to the drawings.

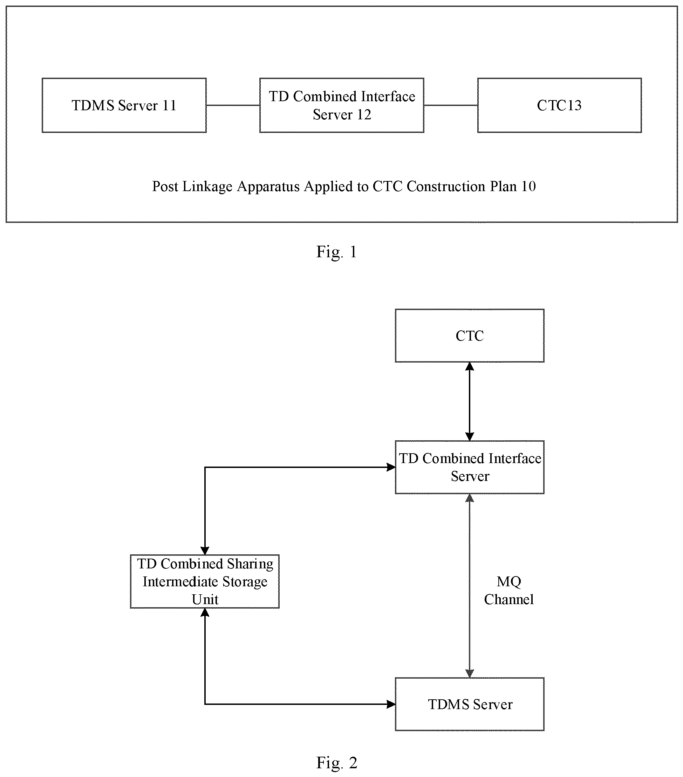

Fig. 1 is a structural block diagram of a post linkage apparatus applied to a CTC construction plan according to an embodiment of the present invention. As shown in Fig. 1, the post linkage apparatus 10 applied to a CTC construction plan includes: a TDMS server 11, a TD combined interface server 12 and a CTC 13;
the TDMS server 11 is used for transmitting information pertaining to a construction symbol to an external device; the CTC is used for transmitting an application message for obtaining a construction blocking station yard device; the TD combined interface server 12 is respectively connected to the TDMS server 11 and the CTC 13, and the TD combined interface server 12 is used for receiving the application message and reading information pertaining to a construction blocking station yard device according to the application message, and transmitting the information pertaining to the application symbol and the information pertaining to the construction blocking station yard device to the CTC 13, such that the CTC 13 automatically determines an associated object according to the information pertaining to the construction symbol, and executes a corresponding action by means of a corresponding execution device after a state control instruction of the associated object is received; the application message includes at least one of a dispatching console entity number, a dispatching console code and a construction symbol date, and the associated object is the construction blocking station yard device or power outage/supply data within a power influence range.

The apparatus further includes a TD combined sharing intermediate storage unit 14, and the TD combined sharing intermediate storage unit 14 is used for storing the information pertaining to the construction blocking station yard device.

In this embodiment, the TDMS server 11 is further connected to the TD combined sharing intermediate storage unit 14, and the TDMS server 11 is further used for creating a data table TD_LOCK_INFO in the TD combined sharing intermediate storage unit 14, and the data table TD_LOCK_INFO includes the information pertaining to the construction blocking station yard device, the information pertaining to the construction blocking station yard device including at least one of a blocking title, a date, a traveling platform number, a construction plan ID (Identity Document), a construction starting time, a station number, a device type, a device ID and a device name, and the device type including at least one of a power arm, a track, and a turnout.

Specifically, as shown in Fig. 2, the TD combined interface server 12 may be started first to establish connections with the TDMS server 11, the CTC 13, the TD combined sharing intermediate storage unit 14 and the MQ (Message Queue) channel respectively, and ensure normal communication. It should be noted that in this embodiment, the TD combined sharing intermediate storage unit 14 may also be a TD combined sharing intermediate database.

After establishing the communication connection, the TDMS server 11 may create and store a data table TD LOCK INFO containing information pertaining to the construction blocking station yard device in the TD combined sharing intermediate storage unit 14. The CTC 13 may transmit an application message for obtaining a construction blocking station yard device to the TD combined interface server 12, and the TD combined interface server 12 receives the application message. The TD combined interface server 12 further receives information pertaining to a construction symbol transmitted by the TDMS server 11 by means of the MQ channel. In this embodiment, the TD combined interface server 12 forwards the corresponding information pertaining to the construction symbol to the CTC 13 according to the parsed content of the application message, for example, forwards the information pertaining to the construction symbol of a corresponding date to the CTC 13 according to the date of a construction symbol. As the application message corresponds to the construction blocking station yard device, the TD combined interface server 12 also reads the data table TD_LOCK_INFO stored in the TD combined sharing intermediate storage unit 14, so as to obtain the information pertaining to the construction blocking station yard device, and further transmits the information pertaining to the construction blocking station yard device to the CTC 13. The CTC 13 can automatically associate, according to the information pertaining to the construction symbol, with an associated object corresponding to the information pertaining to the construction symbol, such as a construction blocking station yard device, and then after receiving a state control instruction of the associated object given by a dispatcher, an unblocking or blocking action can be executed by means of a corresponding execution device. It can be understood that in this embodiment, the information pertaining to the construction symbol is related to the construction plan, for example, specifically related to the construction blocking station yard device in the construction plan.

In an embodiment of the present invention, the TD combined interface server 12 is further connected to the TD combined sharing intermediate storage unit 14, and when the TD combined interface server 12 reads and transmits the information pertaining to the construction blocking station yard device to the CTC 13, the TD combined interface server 12 is specifically used for reading all the information in the data table TD_LOCK_INFO, assembling all the information according to an XML format, and transmitting the assembled information in the XML format to the CTC 13;
when the data volume transmitted by the TD combined interface server 12 is greater than a preset value or the transmitting duration is longer than a preset duration, the TD combined interface server is further used for transmitting a program running stop instruction to perform self-restart.

Specifically, the TD combined interface server 12 reads the content in the data table TD_LOCK_INFO, for example, to acquire a construction plan ID, a construction symbol ID, and a construction blocking station yard device. After reading all information in the data table TD_LOCK_INFO, the TD combined interface server 12 assembles the information content according to an XML format, including a blocking title, a date, a traveling platform number, a construction plan ID, a construction starting time, a station number, a device type, a device ID, a device name, etc. The TD combined interface server 12 then transmits the assembled information pertaining to the construction blocking station yard device in the XML format to the CTC 13, specifically, to an operating diagram terminal in the CTC 13 and a server of which the back end stores construction information.

During data transmission, if the TD combined interface server 12 has an abnormality, or the volume of transmitted data is huge, or reading and forwarding of the information pertaining to the construction blocking station yard device is still uncompleted for 30 minutes, the TD combined interface server 12 may actively terminate the program running and perform self-restart, thereby ensuring normal data transmission.

In an embodiment of the present invention, the CTC 13 includes an operating diagram display unit, and the operating diagram display unit is used for displaying the construction symbol and the construction blocking station yard device or power outage/supply data within the power influence range, which are associated with the construction symbol.

Specifically, after the information pertaining to the construction symbol is displayed on the operating diagram display unit of the operating diagram client, the construction symbol may be automatically associated to the construction blocking station yard device or power outage/supply data within the power influence range, which are transmitted by the TD combined interface server 12.

In an embodiment of the present invention, the apparatus further includes a power outage/supply execution device and an inter-blocking device, in which the power outage/supply execution device is connected to the operating diagram display unit, and the power outage/supply execution device is used for executing a power outage/supply action within a power influence range after the operating diagram display unit receives a power outage/supply state instruction; and the inter-blocking device is connected to the operating diagram display unit, and the inter-blocking device is used for executing an unblocking or blocking action after the operating diagram display unit receives an inter-blocking state control instruction of the construction blocking station yard device.

Specifically, the dispatcher may select a construction symbol on the operating diagram display unit at any time, if the construction symbol is associated with power outage/supply data within the power influence range, "power supply" and "power outage" may appear in a right-click menu for the dispatcher to select, and after the dispatcher completes the selection, the operating diagram display unit may pop up a power arm state setting interface, and automatically determine a power outage/supply state of an overhead contact system according to the selected command content, and after the dispatcher confirms same, the power outage/supply execution device can execute a corresponding setting action.

For example, when the dispatcher selects "power outage", the operating diagram display unit pops up a power arm state setting interface, automatically determines the power outage state of the overhead contact system according to the selected command content, and pops up a confirmation interface; and after the dispatcher confirms same, the power outage/supply execution device executes a power outage action.

A dispatcher can also select a certain construction symbol on the operating diagram display unit at any time, if the construction symbol is associated with a construction blocking station yard device; in the right-click menu, "previewing the construction blocking station yard device" is selected; and a subsequent station yard map interface pops up a single-station yard static station yard map window, which displays the condition of the blocking device.

In the present embodiment, a switching control is further provided on the operating diagram display unit, and when the construction blocking station yard devices are distributed in a plurality of station yards, the switching control is used for receiving a switching instruction, and executing a station yard switching action, in which when the construction blocking station yard devices at the station yards are in different inter-blocking states, the names of the station yards are distinguished in different colors.

Specifically, the pop-up single-station yard static station yard map window has a switching control similar to TAB switching, which is used to switch a plurality of station yards when the blocking devices are distributed in a plurality of station yards, in which the construction blocking station yard devices on the station yards are in an initial, blocked and unblocked state, and the corresponding station yard names are respectively distinguished in black, red and green. In this embodiment, there is also a "blocking" button at the lower part of the window, which is in a hidden state during the non-construction stage and is only displayed about the construction starting time (the deviation time is a configuration item). When the user clicks the "blocking" button, a corresponding operation is automatically transmitted to an autonomous computer, and the inter-blocking device is notified to execute a blocking action. Correspondingly, there is also an "unblocking" button at the lower part of the window, and the button is always in a displayed state. When the user clicks the "unblocking" button, a corresponding operation is automatically transmitted to the autonomous computer, and the inter-blocking device is notified to execute an unblocking action.

In an embodiment of the present invention, the TDMS server 11 is further used for transmitting a dispatching command by means of the TD combined interface server 12, and the CTC 13 is further used for transmitting corresponding dispatching prompt information according to the dispatching command, such that the external device executes a corresponding action by means of a corresponding execution device after the dispatching prompt information is received and confirmed.

The command format of the dispatching command is different from the command format transmitted by the CTC 13 and the TDMS server 11 on the basis of an existing protocol. The dispatching command includes overhead contact system power outage/supply information and/or blocking/unblocking information of the construction blocking station yard device.

In this embodiment, after the TD combined interface server 12 establishes communication connections with the TDMS server 11, the CTC 13, the TD combined sharing intermediate storage unit 14, and the MQ channel, respectively, the TD combined interface server 12 may receive, by means of the MQ channel, overhead contact system power outage/supply information or blocking/unblocking information of the construction blocking station yard device transmitted by the TDMS server 11, taking the overhead contact system power outage/supply information as an example, the CTC 13 may transmit the overhead contact system power outage/supply prompt information to a dispatcher according to the received information, and after the dispatcher performs confirmation, the setting action of the relevant power arm may be executed.

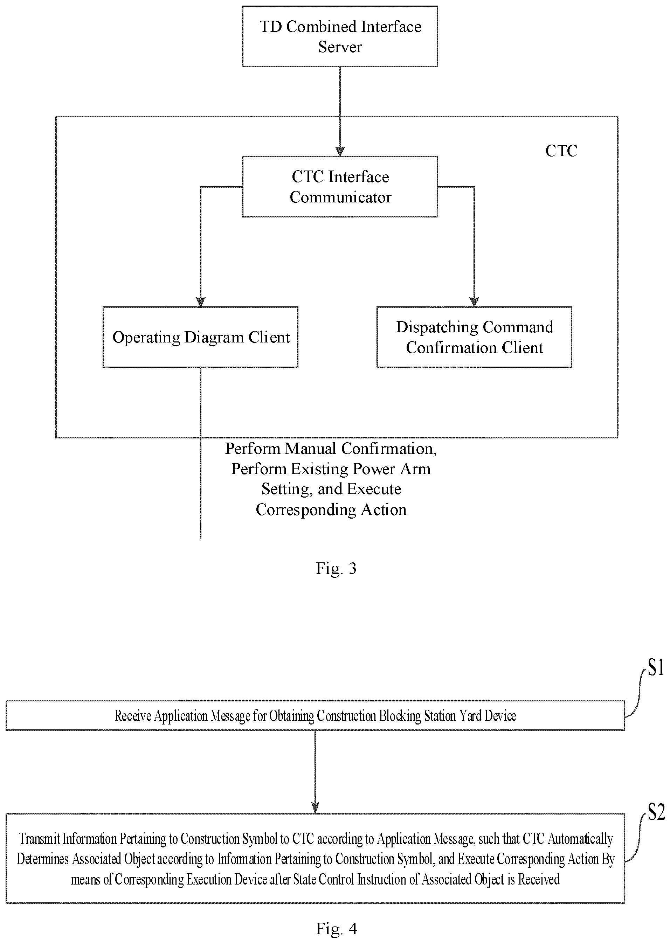

Specifically, the CTC 13 and the TDMS server 11 may define a new dispatching command on the basis of a command format in the existing protocol, for example, a dispatching command with a title "@Change Power Supply dispatching command number", i.e. a power outage/supply dispatching command. As shown in Fig. 3, the TDMS server 11 may transmit, to a CTC interface communicator in the CTC 13, the power outage/supply information in the new formatted dispatching command by means of the TD combined interface server 12, then the CTC interface communicator transmits same to a train dispatching operation interface of the operating diagram client inside the CTC 13, and the train dispatching operation interface correspondingly pops up a power arm state setting interface, and according to the content of the dispatching command, a power outage/supply state of the overhead contact system is automatically determined; and after confirmation of a train dispatcher, a setting action can be executed. It can be understood that, there may be a power outage command indication or a power supply command indication in the dispatching command, and therefore, the pop-up power arm state setting interface may automatically set the power outage/supply state of the overhead contact system, and a corresponding setting action may be executed by means of a power outage/supply device only after confirmation of the train dispatcher.

In this embodiment, the TDMS server 11 is further used for transmitting a non-power outage/supply dispatching command by means of the TD combined interface server 12. As shown in Fig. 3, the TD combined interface server 12 may transmit the non-power outage/supply dispatching command to a dispatching command client in the CTC 13 according to the original transmission process, so as to execute the non-power outage/supply dispatching command, i.e. other dispatching commands.

It should be noted that, the TDMS server 11 is further used for transmitting a railway operating device list to an external device, such that a railway operator performs an inter-blocking control and a power outage/supply control on the construction blocking station yard and a power arm in the railway operating device list correspondingly.

Further, the present invention also provides a post linkage method applied to a CTC construction plan. As shown in Fig. 4, the method includes:
step S 1: receiving an application message for obtaining a construction blocking station yard device;
and step S2: transmitting information pertaining to a construction symbol to a CTC according to the application message, such that the CTC automatically determines an associated object according to the information pertaining to the construction symbol, and executes a corresponding action by means of a corresponding execution device after a state control instruction of the associated object is received,
in which if the associated object is power outage/supply data in a power influence range and a power outage/supply state instruction is received, then a power outage/supply action in the power influence range is executed by means of a power outage/supply execution device; and if the associated object is the construction blocking station yard device and an inter-blocking state control instruction of the construction blocking station yard device is received, then an unblocking or blocking action can be executed by means of an inter-blocking device.

Specifically, taking the communication link in Fig. 2 as an example, the TD combined interface server can receive an application message for obtaining a construction blocking station yard device, and forwards the corresponding information pertaining to the construction symbol to the CTC according to the parsed content of the application message. As the application message corresponds to the construction blocking station yard device, the TD combined interface server also reads the information pertaining to the construction blocking station yard device from an external device, and further transmits the information pertaining to the construction blocking station yard device to the CTC. The CTC can automatically associate, according to the information pertaining to the construction symbol, with an associated object corresponding to the information pertaining to the construction symbol, such as a construction blocking station yard device, and then after receiving a state control instruction of the associated object given by a dispatcher, an unblocking or blocking action can be executed by means of a corresponding execution device. For example, if the associated object is power outage/supply data in a power influence range and a power outage/supply state instruction is received, then a power outage/supply action in the power influence range is executed by means of a power outage/supply execution device; and if the associated object is the construction blocking station yard device and an inter-blocking state control instruction of the construction blocking station yard device is received, then an unblocking or blocking action can be executed by means of an inter-blocking device.

In an embodiment of the present invention, the method further includes: transmitting a dispatching command; transmitting corresponding dispatching prompt information according to the dispatching command, such that an external device executes a setting action of an existing power arm in the CTC after the dispatching prompt information is received and confirmed, in which the dispatching command includes overhead contact system power outage/supply information and/or blocking/unblocking information of the construction blocking station yard device.

In this embodiment, the TD combined interface server may receive, by means of the MQ channel, overhead contact system power outage/supply information or blocking/unblocking information of the construction blocking station yard device transmitted by the TDMS server, taking the overhead contact system power outage/supply information as an example, the CTC may transmit the overhead contact system power outage/supply prompt information to the dispatcher according to the received information, and after the dispatcher performs confirmation, a setting action of the power arm existing in the CTC can be executed. For example, the TDMS server may transmit, to a CTC interface communicator in the CTC, the power outage/supply information in the new formatted dispatching command by means of the TD combined interface server, then the CTC interface communicator transmits same to a train dispatching operation interface of the operating diagram client inside the CTC, and the train dispatching operation interface correspondingly pops up a power arm state setting interface, and according to the content of the dispatching command, a power outage/supply state of the overhead contact system is automatically determined; and after confirmation of a train dispatcher, a setting action is executed.

It should be noted that, for the specific implementation of the post linkage method applied to a CTC construction plan according to this embodiment, reference may be made to the described specific implementation of the post linkage apparatus applied to a CTC construction plan, which is not described herein again to avoid redundancy.

Furthermore, the present invention further provides a computer-readable storage medium, storing a computer program which, when being executed by a processor, implements the post linkage method applied to a CTC construction plan.

Furthermore, the present invention further provides an electronic device, including a processor and a memory, the memory storing a computer program which, when being executed by the processor, implements the post linkage method applied to a CTC construction plan.

In summary, in the present invention, the TD combined interface server receives an application message for obtaining a construction blocking station yard device transmitted by the CTC, and according to the application message, transmits, to the CTC, the read information pertaining to the construction blocking station yard device and information pertaining to the construction symbol, so that the CTC can automatically determine an associated object according to the information pertaining to the construction symbol, and after receiving a state control instruction of the associated object, execute a blocking/unblocking action or power outage/supply action by means of a corresponding execution device, such that the present invention achieves partial extension of a construction plan on the basis of an existing TD combined protocol, and achieves the effect of transmitting the range of the railway operating devices affected by construction, such as turnouts, tracks, a signal machine, an overhead contact system, etc., to the CTC from the TDMS, so that the CTC operates the relevant devices according to the construction plan, such as information pertaining to a construction symbol, thereby implementing batch settings, such as line blocking, power outage/supply of an overhead contact system, and reducing the labour intensity of railway dispatchers. In addition, in the present invention, at the beginning of construction, on the CTC, the train dispatchers can block the relevant station yard devices in batch according to a railway operating device list in the construction plan obtained from the TDMS, set a power outage state for a power arm, so that safety protection for line blocking can be achieved, and when construction is finished, the train dispatchers can unblock the relevant station yard devices in batches according to the railway operating device list, and set a power supply state for the power arm, so that normal operation of the lines can be ensured.

Although the content of the present invention has been described in details through the above preferred embodiments, it should be realized that the above description should not be considered as limit to the present invention. Various modifications and alternatives to the present invention will become apparent to those skilled in the art upon reading the foregoing disclosure. Accordingly, the protection scope of the present invention shall be limited by the appended claims.

## Claims

1. A post linkage apparatus applied to a CTC construction plan, comprising:
a TDMS server, for transmitting information pertaining to a construction symbol to an external device;
a CTC, for transmitting an application message for obtaining a construction blocking station yard device;
a TD combined interface server, respectively connected to the TDMS server and the CTC, wherein the TD combined interface server is used for receiving the application message and reading information pertaining to the construction blocking station yard device according to the application message, and transmitting the information pertaining to the construction symbol and the information pertaining to the construction blocking station yard device to the CTC, such that the CTC automatically determines an associated object according to the information pertaining to the construction symbol, and executes a corresponding action by means of a corresponding execution device after a state control instruction of the associated object is received.

2. The post linkage apparatus applied to a CTC construction plan according to claim 1, wherein the TDMS server is further used for transmitting a dispatching command by means of the TD combined interface server, and the CTC is further used for transmitting corresponding dispatching prompt information according to the dispatching command, such that the external device executes a corresponding action by means of a corresponding execution device after the dispatching prompt information is received and confirmed.

3. The post linkage apparatus applied to a CTC construction plan according to claim 2, wherein a command format of the dispatching command is different from a command format transmitted by the CTC and the TDMS server on the basis of an existing protocol.

4. The post linkage apparatus applied to a CTC construction plan according to claim 3, wherein the dispatching command comprises overhead contact system power outage/supply information and/or blocking/unblocking information pertaining to the construction blocking station yard device.

5. The post linkage apparatus applied to a CTC construction plan according to claim 4, wherein the TDMS server is further used for transmitting a non-power outage/supply dispatching command by means of the TD combined interface server.

6. The post linkage apparatus applied to a CTC construction plan according to claim 5, further comprising:
a TD combined sharing intermediate storage unit, for storing the information pertaining to the construction blocking station yard device.

7. The post linkage apparatus applied to a CTC construction plan according to claim 6, wherein the TDMS server is further connected to the TD combined sharing intermediate storage unit, and the TDMS server is further used for creating a data table in the TD combined sharing intermediate storage unit, the data table comprising the information pertaining to the construction blocking station yard device, the information pertaining to the construction blocking station yard device comprising at least one of a blocking title, a date, a traveling platform number, a construction plan ID, a construction start time, a station number, a device type, a device ID and a device name, and the device type comprising at least one of a power arm, a track, and a turnout.

8. The post linkage apparatus applied to a CTC construction plan according to claim 7, wherein the TD combined interface server is further connected to the TD combined sharing intermediate storage unit, and when the TD combined interface server reads and transmits the information pertaining to the construction blocking station yard device to the CTC, the TD combined interface server is specifically used for reading all the information in the data table, assembling all the information according to an XML format, and transmitting the assembled information in the XML format to the CTC.

9. The post linkage apparatus applied to a CTC construction plan according to claim 1, wherein the associated object is the construction blocking station yard device or power outage/supply data in a power influence range.

10. The post linkage apparatus applied to a CTC construction plan according to claim 9, wherein the CTC comprises:
an operating diagram display unit, for displaying a construction symbol and the construction blocking station yard device and the power outage/supply data in the power influence range which are associated with the construction symbol.

11. The post linkage apparatus applied to a CTC construction plan according to claim 10, further comprising:
a power outage/supply execution device, connected to the operating diagram display unit, and used for executing a power outage/supply action in the power influence range after the operating diagram display unit receives a power outage/supply state instruction; and
an inter-blocking device, connected to the operating diagram display unit, and used for executing an unblocking or blocking action after the operating diagram display unit receives an inter-blocking state control instruction of the construction blocking station yard device.

12. The post linkage apparatus applied to a CTC construction plan according to claim 11, wherein a switching control is provided on the operating diagram display unit, and when the construction blocking station yard devices are distributed at a plurality of station yards, the switching control is used for receiving a switching instruction, and executing a station yard switching action, and wherein when the construction blocking station yard devices at the station yards are in different inter-blocking states, the names of the station yards are distinguished in different colors.

13. The post linkage apparatus applied to a CTC construction plan according to claim 12, wherein the TDMS server is further used for transmitting a railway operating device list to the external device, such that a railway operator performs an inter-blocking control and a power outage/supply control on the construction blocking station yard and a power arm in the railway operating device list correspondingly.

14. The post linkage apparatus applied to a CTC construction plan according to any one of claims 1-13, wherein the application message comprises at least one of a dispatching console entity number, a dispatching console code and a construction symbol date.

15. The post linkage apparatus applied to a CTC construction plan according to claim 14, wherein when the data volume transmitted by the TD combined interface server is greater than a preset value or the transmitting duration is longer than a preset duration, the TD combined interface server is further used for transmitting a program running stop instruction to perform self-restart.

16. A post linkage method applied to a CTC construction plan, comprising:
receiving an application message for obtaining a construction blocking station yard device; and
transmitting information pertaining to a construction symbol to a CTC according to the application message, such that the CTC automatically determines an associated object according to the information pertaining to the construction symbol, and executes a corresponding action by means of a corresponding execution device after a state control instruction of the associated object is received.

17. The post linkage method applied to a CTC construction plan according to claim 16, further comprising:
transmitting a dispatching command;
transmitting corresponding dispatching prompt information according to the dispatching command, such that an external device executes a setting action of an existing power arm in the CTC after the dispatching prompt information is received and confirmed, wherein the dispatching command comprises overhead contact system power outage/supply information and/or blocking/unblocking information pertaining to the construction blocking station yard device.

18. The post linkage method applied to a CTC construction plan according to claim 16, wherein if the associated object is power outage/supply data in a power influence range and a power outage/supply state instruction is received, then a power outage/supply action in the power influence range is executed by means of a power outage/supply execution device; and if the associated object is the construction blocking station yard device and an inter-blocking state control instruction of the construction blocking station yard device is received, then an unblocking or blocking action is executed by means of an inter-blocking device.

19. A computer readable storage medium, storing a computer program therein, wherein when the computer program is executed by a processor, the post linkage method applied to a CTC construction plan according to any one of claims 16-18 is implemented.

20. An electronic device, comprising a processor and a memory, wherein the memory stores a computer program, and when the computer program is executed by the processor, the post linkage method applied to a CTC construction plan according to any one of claims 16-18 is implemented.
